# EUROPEAN PATENT SPECIFICATION

(11) **EP 1 204 964 B1**
(45) Date of publication and mention of the grant of the patent: **06.04.2005**
(21) Application number: 00922796.8
(22) Date of filing: 20.04.2000
(51) Int. Cl.: G10L 13/08

(54) **IMPROVED TEXT TO SPEECH CONVERSION**
VERBESSERTE TEXT-ZU-SPRACHE UMSETZUNG
PROCEDE AMELIORE DE CONVERSION DE TEXTE EN UN MESSAGE PARLE

(30) Priority: 21.07.1999 EP 99305779
(43) Date of publication of application: 15.05.2002
(73) Proprietor: LUCENT TECHNOLOGIES INC., Murray Hill, New Jersey 07974-0636 (US)
(72) Inventor: DIDCOCK, Clifford, Neil, Wantage, Oxon OX12 8LX (GB); WILSON, Michael, Geoffrey, Andrew, London E11 IJH (GB)
(74) Representative: Williams, David John
(86) International application number: PCT/GB2000/001567
(87) International publication number: WO 2001/006489

(56) References cited:
- EP-A- 0 847 018
- EP-A- 0 889 626
- EP-A- 0 889 628
- WO-A-96/12271
- US-A- 5 568 383

## Description

### Field of the Invention

The present invention relates to systems and methods for voice and text messaging, as well as systems and method for language recognition. More particularly, the present invention relates to a communications system that automatically identifies a language associated with a text message, and performs an appropriate text-to-speech conversion. An example of such a system is an e-mail reader or unified messaging application.

### Background to the Invention

Computer-based techniques for converting text into speech have become well-known. Via such techniques, textual data is translated to audio information by a text-to-speech conversion "engine", which most commonly comprises software. Examples of text-to-speech software include Apple Computer's Speech Manager (Apple Computer corporation, Cupertino, CA), and Digital Equipment Corporation's DECTalk (Digital Equipment Corporation, Cambridge, MA). In addition to converting textual data into speech, such software is responsive to user commands for controlling volume, pitch, rate, and other speech-related parameters.

A text-to-speech engine generally comprises a text analyzer, a syntax and context analyzer, and a synthesis module. The text analyzer, in conjunction with the syntax and context analyzer, utilizes a rule-based index to identify fundamental grammatical units within textual data. The fundamental grammatical units are typically word and/or phoneme-based, and the rule-based index is correspondingly referred to as a phoneme library. Those skilled in the art will understand that the phoneme library typically includes a word-based dictionary for the conversion of orthographic data into a phonemic representation. The synthesis module either assembles or generates speech sequences corresponding to the identified fundamental grammatical units, and plays the speech sequences to a listener.

Text-to-speech conversion can be very useful within the context of unified or integrated messaging systems. In such messaging systems, a voice processing server is coupled to an electronic mail system, such that a user's e-mail in-box provides message notification as well as access to messaging services for e-mail messages, voice messages, and possibly other types of messages such as faxes. An example of a unified messaging system is Octel's Unified Messenger (Octel Communications Corporation, Milpitas, CA). Such systems selectively translate an e-mail message into speech through the use of text-to-speech conversion. A user calling from a remote telephone can therefore readily listen to both voice and e-mail messages. Thus. a unified messaging system employing text-to-speech conversion eliminates the need for a user to have direct access to their computer during message retrieval operations.

In many situations, messaging system users can expect to receive textual messages written in different languages. For example, a person conducting business in Europe might receive e-mail messages written in English, French, or German. To successfully convert text into speech within the context of a particular language requires a text-to-speech engine designed for that language. Thus, to successfully convert French text into spoken French requires a text-to-speech engine designed for the French language, including a French-specific phoneme library. Attempting to convert French text into spoken language through the use of an English text-to-speech engine would produce a large amount of unintelligible output.

In the prior art, messaging systems are known which rely upon a human 'listener' to specify a given text-to-speech engine to be used in converting a message into speech. The human 'listener' is the subscriber on the other end of a telephone line. Alternatively, some systems enable a message originator to specify a language identification code that is sent with the message. Both of these approaches are inefficient and inconvenient.

In U.S. patent application serial number 09/099,744 filed 13^{th} July 1997, (published as US 2 001 056 348 A a unified messaging system providing automatic language identification for the conversion of textual messages into speech is described. In this system the language of the text to be converted to speech is identified automatically without the need for any input from the user or subscriber.

The disadvantage with this automatic system is that there is no flexibility for a different language to be chosen should the automatic language selected be incorrect. For example the automatic language identifier may identify several languages having a similar likelihood of being. the right language, and the right language might not have the highest likelihood due to deficiencies in the language recognition. Such a system is most likely to be incorrect for short segments of text.

In EP-A-0889626 a unified messaging system providing automatic language identification for the conversion of textual messages into speech is described. In the system the language of the text to be converted to speech is identified automatically without the need for any input from the user or subscriber.

It is therefore an object of the present invention to provide an improved system for converting text into speech, for delivery to a telephony user.

### Summary of the Invention

According to one aspect of the present invention there is provided a method of operating language-based conversion of a text message into speech as defined in claim 1.

According to another aspect of the present invention there is provided a messaging system for converting a text message into computer generated speech as defined in claim 8.

Specific aspects of the present invention are as defined in the dependent claims.

The invention will now be described by way of reference to a preferred embodiment with reference to the accompanying drawings in which:

### Brief Description of the Drawings

Figure 1 is a block diagram of a preferred embodiment of a unified messaging system in which the present invention may be utilised;
Figure 2 is a block diagram of an embodiment of a voice server suitable for the messaging system of claim 1;
Figure 3 is a flowchart of a preferred method for providing automatic language identification for text-to-speech; and
Figures 4(a) and 4(b) are flowcharts of a preferred method for providing over-ride of the automatic language identification of Figure 3.

### Description of Preferred Embodiment

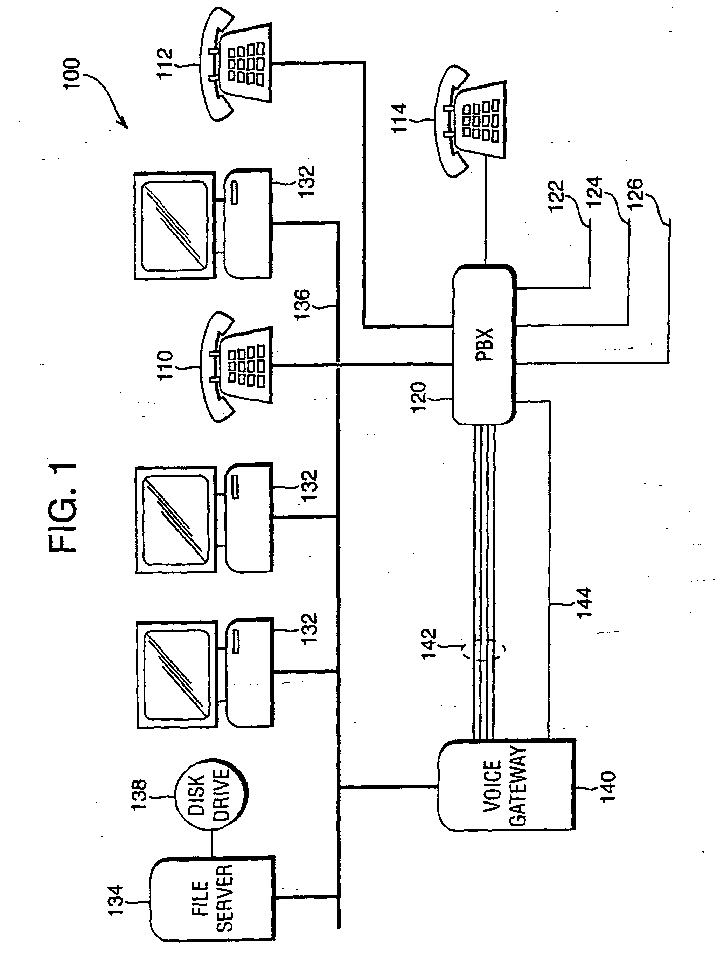

Referring now to Figure 1, a block diagram of a preferred embodiment of a unified messaging system 100 in which the present invention may be implemented is shown. The unified messaging system 100 comprises a set of telephones 110, 112, 114 coupled to a Private Branch Exchange (PBX) 120; a computer network comprising a plurality of computers 132 coupled to a file server 134 via a network line 136, where the file server 134 is additionally coupled to a data storage device 138; and a voice gateway server 140 that is coupled to the network line 136, and coupled to the PBX 120 via a set of telephone lines 142 as well as an integration link 144. The PBX 120 is further coupled to a telephone network via a collection of trunks 122, 124, 126. The unified messaging system 100 shown in Figure 1 is equivalent to the described in U.S. Patent No. 5,557,659, entitled "Electronic Mail System Having Integrated Voice Messages". Although the invention is described herein with reference to the particular system shown in Figure 1, those skilled in the art will recognize that the teachings of the present invention are applicable to essentially any unified or integrated messaging environment, or other e-mail reading application.

In the present invention, conventional software executing upon the computer network provides file transfer services and group access to software applications. as well as an electronic mail (e-mail) system through which a computer user can transfer messages as well as message attachments between their computers 132 via the file server 134. In an exemplary embodiment, Microsoft Exchange™ software (Microsoft Corporation, Redmond, WA) executes upon the computer network to provide such functionality. Within the file server 134, an e-mail directory associates each computer user's name with a message storage location, or "in-box," and a network address, in a manner that will be readily understood by those skilled in the art. The voice gateway server 140 facilitates the exchange of messages between the computer network 130 and a telephone system. Additionally, the voice gateway server 140 provides voice messaging service such as call answering, automated attendant, voice message store and forward, and message inquiry operations to voice messaging subscribers. In the preferred embodiment, each subscriber is a computer user identified in the e-mail directory, that is, having a computer 132 coupled to the computer network. Those skilled in the art will recognize that in an alternate embodiment, the voice messaging subscribers could be a subset of computer users. In yet another alternate embodiment, the computer users could be a subset of a larger pool of voice messaging subscribers, which might be useful when the voice gateway server is primarily used for call answering.

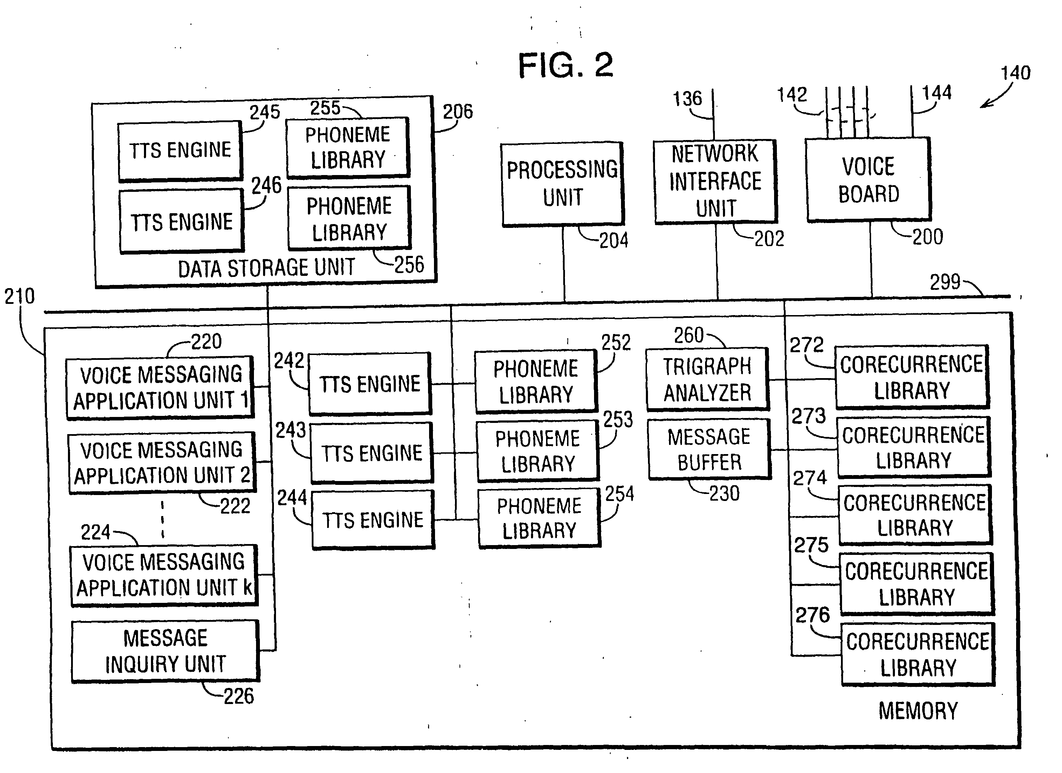

Referring also now to Figure 2, a block diagram of a first embodiment of a voice gateway server 140 is shown.

In the first embodiment, the voice gateway server 140 comprises a voice board 200, a network interface unit 202, a processing unit 204, a data storage unit 206, and a memory 210. The memory 210 includes a plurality of voice messaging application units 220, 222, 224, 226; a message buffer 230; a set of text-to-speech engines 242, 243, 244 and corresponding phoneme libraries 252, 253, 254, a trigraph analyser 260; and a plurality of corecurrence libraries 272, 273, 274, 275, 276 reside. Each element within the voice gateway server 140 is coupled to a common bus 299. The network interface unit 202 is additionally coupled to the network line 136, and the voice board 200 is coupled to the PBX 120.

The voice board 200 preferably comprises conventional circuitry that interfaces a computer system with telephone switching equipment, and provides telephony and voice processing functions. The network interface unit 202 preferably comprises conventional circuitry that manages data transfers between the voice gateway server 140 and the computer network 130. In a preferred embodiment, the processing unit 204 and the data storage unit 206 are also conventional.

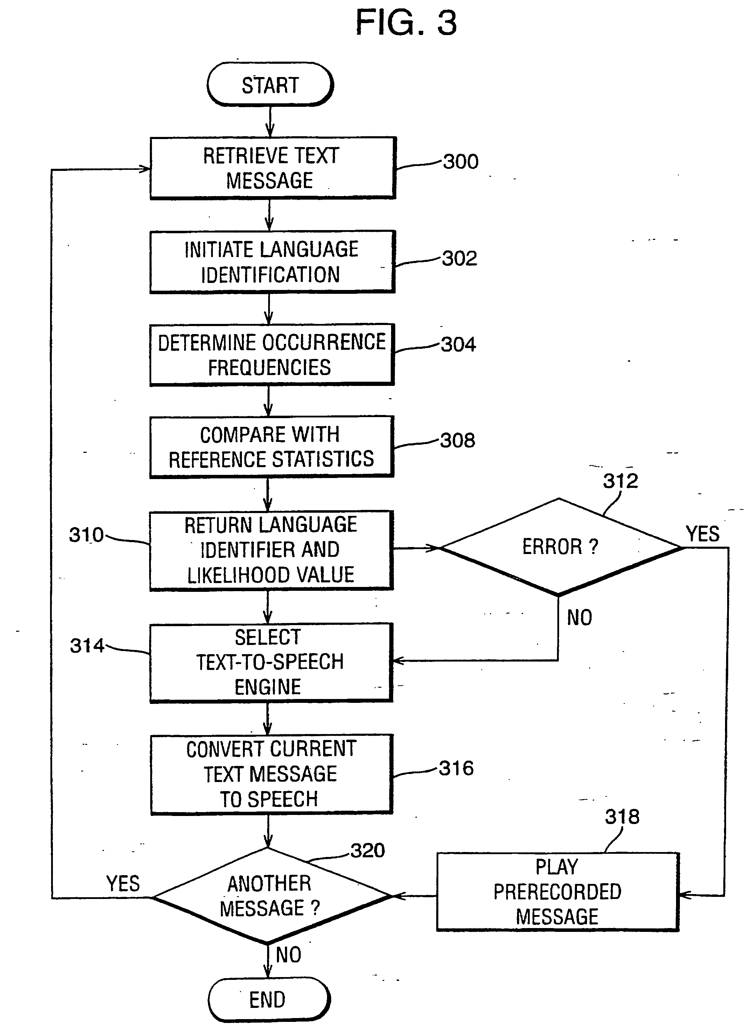

The voice messaging application units 220, 222, 224, 226 provide voice messaging services to subscribers, including call answering, automated attendant, and voice message store and forward operations. A message inquiry unit 226 directs telephone-based message playback operations in response to a subscriber request. In response to a voice message review request, the message inquiry unit 226 initiates the retrieval of a voice message associated with the subscriber's in-box, followed by the playing of the voice message to the user via the telephone in a conventional manner. In response to a text message review request, the message inquiry unit 226 initiates retrieval of a text message associated with the subscriber's in-box, followed by automatic language recognition and text-to-speech conversion operations, as described in detail below with reference to Figure 3. In the preferred embodiment, each voice messaging application unit 220, 222, 224, 226 comprises program instruction sequences that are executable by the processing unit 204.

The message buffer 230 comprises a portion of the memory 200 reserved for temporarily storing messages before or after message exchange with the file server 134. The text-to-speech engines 242, 243, 244, 245, 246 preferably comprise conventional software for translating textual data into speech. Those skilled in the art will readily understand that in an alternate embodiment, one or more portions of a text-to-speech engine 242, 243, 244, 245. 246 could be implemented using hardware.

The number of text-to-speech engines 242. 243, 244 resident within the memory 210 at any given time is determined according to the language environment in which the present invention is employed. In the preferred embodiment, the memory 210 includes a text-to-speech engine 242, 243, 244 for each language within a group of most-commonly expected languages. Additional text-to-speech engines 245, 246 preferably reside upon the data storage unit 206, and are loaded into the memory 210 when text-to-speech conversion for a language outside the aforementioned group is required, as described in detail below. In an exemplary embodiment, text-to-speech engines 242, 243, 244 corresponding to English, French, and German reside within the memory 210, while text-to-speech engines 245, 246 for Portuguese, Italian and/or other languages reside upon the data storage unit 206. Those skilled in the art will recognize that in an alternate embodiment, the number of text-to-speech engines 242. 243, 244 resident within the memory could be determined according to a memory management technique. such as virtual memory methods, where text-to-speech engines 242, 243. 244 are conventionally swapped out to the data storage unit 206 as required.

The memory 210 preferably includes a conventional phoneme library 252, 253, 254 corresponding to each text-to-speech engine 242, 243, 244 residing therein. In the preferred embodiment, a phoneme library 255, 256 also resides upon the data storage unit 206 for each text-to-speech engine 245, 246 stored thereupon.

This embodiment preferably relies upon n-graph method for textual language identification, in particular, techniques developed by Clive Souter and Gavin Churcher at the University of Leeds in the United Kingdom, as reported in I) "Bigram and Trigram Models for Language Identification and Classification," Proceedings of the AISB Workshop on Computational Linguistics for Speech and Handwriting Recognition, University of Leeds, 1994; 2) "Natural Language Identification Using Corpus-Based Models," Hermes Journal of Linguistics 13: 183-204, 1994; and 3) "N-gram Tools for Generic Symbol Processing," M. Sc. Thesis of Phil Cave, School of Computer Studies, University of Leeds 1995.

In n-graph language identification. the occurrence frequencies of successive n-character combinations within a textual message are compared with reference n-character occurrence statistics associated with particular languages. The reference statistics for any given language are automatically derived or modeled from text samples taken from that language. Herein, the reference n-character occurrence statistics for a given language are stored together as a corecurrence library 272, 273, 274, 275, 276.

This embodiment preferably employs the trigraph analyzer 260 and corecurrence libraries 272, 273, 274, 275, 276 to perform trigraph-based language identification, that is language identification based upon the statistical occurrences of three-letter combinations. In the preferred embodiment, the memory 210 includes a corecurrence library 272, 273, 274, 275. 276 corresponding to each text-to-speech engine 242, 243, 244, within the memory 210 as well as each text-to-speech engine 245, 246 stored upon the data storage device 206.

The trigraph analyser 260 returns a language identifier and a likelihood or percentage value that indicates relative language identification certainty. As developed at the University of Leeds, the trigraph analyzer 260 approaches 100% accuracy when textual input comprises at least 175 characters. The trigraph analyzer 260 additionally maintains high language identification accuracy, typically greater than 90%, for shorter-length text sequences.

In an exemplary embodiment, the voice gateway server 140 is a personal computer having a 200 MHz Intel Pentium™ Processor (Intel Corporation, Santa Clara, CA); 128 Megabytes of Random Access memory (RAM); an Ethernet-based network interface unit 202; a Redundant Array of Inexpensive Disks (RAID) drive serving as the data storage unit 206; a Rhetorex voice board (Rhetorex Corporation, San Jose, CA); DECTalk text-to-speech engines 242, 243, 244, 245, 246 and corresponding phoneme libraries 252, 253, 254, 255, 256 (Digital Equipment Corporation, Cambridge, MA); the aforementioned trigraph analyzer 260 and associated corecurrence libraries 272, 273. 274, 275, 276 developed at the University of Leeds: and voice messaging application units 220, 222, 224, 226 implemented using Octel's Unified Messenger software (Octel Communications Corporation, Milpitas, CA).

Referring now to Figure 3, a flowchart of a first and preferred method for providing language based conversion of a text message into speech is shown. The preferred method begins in step 300 in response to a subscriber's issuance of a text message review request, with the message inquiry unit 226 retrieving a text message from the subscriber's in-box, or from a particular data file or folder as specified by the subscriber. In the preferred embodiment, the subscriber's in-box corresponds to a file server storage location, and the retrieved text message is transferred to the message buffer 230. Following step 300, in an automatic mode of operation of the system the message inquiry unit 226 issues an identification directive to the trigraph analyzer 260 in step 302, thereby initiating language identification. In response to the identification directive, the trigraph analyser 260 examines successive 3-character combinations within the text message currently under consideration, and determines occurrence frequencies for the character combinations in step 304. In the preferred embodiment, the trigraph analyer 260 examines at least the first 175 characters of the text message in the event that the text message is sufficiently long; otherwise, the trigraph analyzer 260 examines the longest character sequence possible. Following the determination of the occurrence frequencies for the current text message, the trigraph analyzer 260 compares the occurrence frequencies with the reference occurrence statistics in each corecurrence library 272, 273, 274, 275, 276 and determines a closest match with a particular corecurrence library 272, 273, 274, 275 in step 308. Upon determining the closest match, the trigraph analyzer 260 returns a language identifier and an associated likelihood value to the message inquiry unit 226 in step 310. Those skilled in the art will recognize that the trigraph analyzer 260 could return a set of language identifiers and a likelihood value corresponding to each language identifier in an alternate embodiment.

As long as the text message is written in a language corresponding to one of the corecurrence libraries 272, 273, 274, 275, 276, the correlation between the occurrence frequencies and the reference occurrence statistics is likely to be sufficient for successful language identification. If the text message is written in a language that does not correspond to any of the corecurrence libraries 272, 273, 274, 275, 276 present, the correlation will be poor, and a closet match cannot be determined. In the event that the likelihood value returned by trigraph analyzer 260 is below a minimum acceptable threshold (for example, 20%), the message inquiry unit 226 plays a corresponding prerecorded message to the subscriber via steps 312 and 318. An exemplary prerecorded message could be "language identification unsuccessful".

Upon receiving the language identifier and an acceptable likelihood value, the message inquiry unit 226 automatically selects the appropriate text-to-speech engine 242, 243, 244, 245, 246 in step 314. In the event that the text-to-speech engine 244, 245 and its associated phoneme library 254, 255 do not presently reside within the memory 210, the message inquiry unit 226 transfers the required text-to-speech engine 244, 245 and the corresponding phoneme library 254, 255 from the data storage unit 206 into the memory 210.

After step 314, the message inquiry unit 226 issues a conversion directive to the selected text-to-speech engine 242, 243, 244, 245, 246 in step 316, following which the text message currently under consideration is converted to speech and played to the subscriber in a conventional manner. Upon completion of step 316, the message inquiry unit 226 determines whether another text message in the subscriber's in-box, or as specified by the subscriber, requires consideration in step 320. If so, the preferred method proceeds to step 300; otherwise, the preferred method ends.

In an alternate embodiment, steps 312 and 318 could be omitted, such that step 310 directly proceeds to step 314 to produce a "best guess" text-to-speech conversion played to the subscriber. In such an alternate embodiment, the message inquiry unit 226 could 1) disregard the likelihood value: or 2) select the language identifier associated with a best likelihood value in the event that multiple language identifiers and likelihood values are returned.

In the preferred embodiment, textual language identification is performed, followed by text-to-speech conversion in the appropriate language. This results in the subscriber listening to computer-generated speech that matches the language in which the original text message was written. In an alternate embodiment, textual language identification could be performed, followed by text-to-text language conversion (i.e., translation), followed by text-to-speech conversion such that the subscriber listens to computer generated speech in a language with which the subscriber is most comfortable. To facilitate this alternate embodiment, a set of subscriber language preference selections are stored as user-configuration data within a subscriber-information database or directory. The subscriber information database could reside within the voice gateway server 140, or it could be implemented in association with the file server's e-mail directory in a manner those skilled in the art will readily understand. Additionally, the voice gateway server 140 is modified to include additional elements, as described in detail hereafter.

In accordance with the present invention, at all times after the method described hereinabove with reference to Figure 3 starts, the message enquiry unit 226 monitors for additional requests from the subscriber.

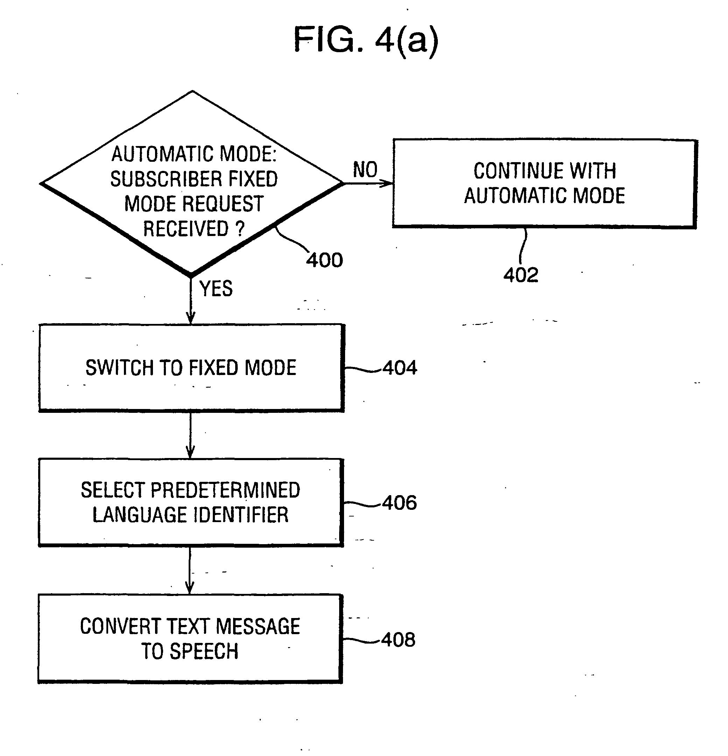

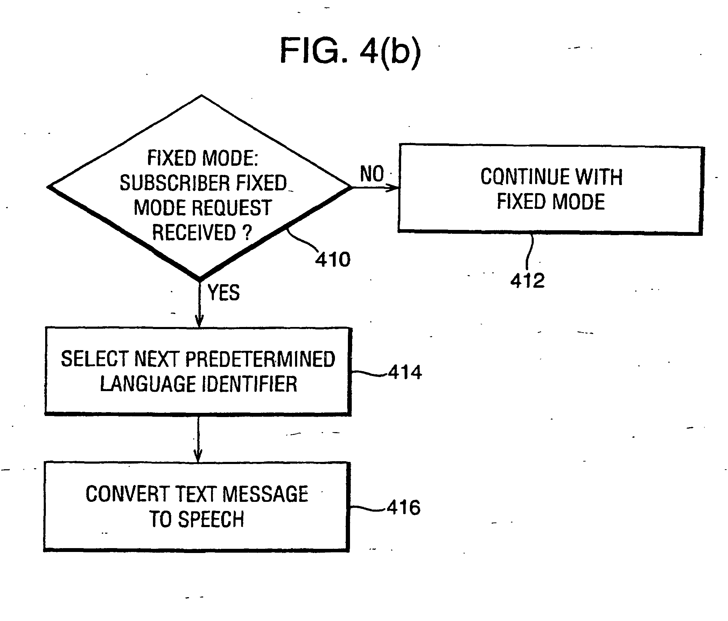

In accordance with the present invention, the system has an automatic mode of operation as described hereinabove with reference to Figure 3 in which the language identifier for text-to-speech conversion is selected automatically, and a fixed mode of operation. In the fixed mode of operation, responsive to a subscriber fixed mode request received by the message enquiry unit 226, the system enters a fixed mode of operation in which the language identifier is predetermined. The fixed of operation may be selected by a pre-determined sequence of DTMF key presses by the subscriber. Referring to Figure 4(a), when the system is in automatic mode in a step 400 the message enquiry unit 226 monitors for a subscriber fixed mode request. As long as a subscriber fixed mode request is not received, in a step 402 the system continues in automatic mode and operates as described hereinabove with reference to Figure 3.

If, however, the message enquiry unit 226 does receive a subscriber fixed mode request then in a step 404 the system switches to the fixed mode of operation.

The most likely point in time at which the message enquiry unit will receive a subscriber fixed mode request is in step 316 of Figure 3. If the user listens to the converted text and realises that the language selected must be incorrect due to the speech being unitelligible, then the subscriber may opt to select one of the predetermined language identifiers to attempt to achieve the correct language selection.

In a step 406, responsive to the fixed mode being entered a predetermined language identifier is selected. The selection, in fixed mode, of the predetermined language identifier may vary.

In a preferable embodiment in response to the first subscriber fixed mode request the first language identifier in a pre-configured set of language identifiers is selected. The set of pre-configured language identifiers may be arranged according to the expected likelihood of that language occurring. Thus in the present example, the language identifier associated with TTS engine 242 may be selected. The language identifiers associated with TTS engines 243, 244, 245, and 246 are respectively then second, third, fourth and fifth in the list.

Of course, the 'current' language should be removed from the pre-configured set of language identifiers, or skipped as the set is sequenced through. This refinement can be made since the 'current' language is clearly incorrect.

In an alternative arrangement, the language identifier may be the next language identifier after the language identifier associated with the automatic selection. Thus if the automatic selection selects the language identifier associated with TTS engine 244, responsive to the subscriber fixed mode request the language identifier associated with TTS engine 245 may be selected.

In a further alternative embodiment the likelihood values returned in step 310 may be utilised, such that the language identifier having the next highest likelihood following the language identifier selected in the automatic step is selected.

After the selection of the predetermined language identifier, in step 408 the text message under consideration is converted to speech and played to the subscriber in the conventional manner.

Referring to Figure 4(b), after the system has entered the fixed mode of operation in step 404, in a step 410 the message inquiry unit 226 monitors for receipt of a further subscriber fixed mode request from the subscriber. As long as no further subscriber fixed mode request is received, then in a step 412 the system continues as described hereinabove with reference to Figure 4(a).

If a further subscriber fixed mode request is received, then in a step 414 a further predetermined language identifier is selected. The procedure by which the further predetermined language identifier is selected may vary according to the application. The further predetermined language identifier may be selected according to the language identifier associated with the next TTS engine in a predetermined list. Alternatively it may be selected according to the language identifier having the next highest likelihood. Once the further language identifier is selected, in step 416 the text message under consideration is converted to speech and played to the subscriber in the conventional manner.

Once conversion of the current text message is completed in either step 408 or 416, then in a preferred embodiment the method returns to step 320 of Figure 3. If another message is to be converted then the method continues again in automatic mode until further interruption by the subscriber. In an alternative arrangement, for the next and subsequent message the system may continue in fixed mode using the currently selected language identifier. The subscriber may successively request fixed mode operation for the same current message, effectively cycling through the list of available language identifiers until the speech message becomes intelligible.

In a preferable embodiment, when the system is in the fixed mode of operation the message enquiry unit is responsive to a subscriber automatic mode request to return to the automatic mode of operation. The automatic mode of operation may be selected by a pre-determined sequence of DTMF key presses by the subscriber.

Thus in the fixed mode of operation as shown in Figures 4(a) and 4(b) the message enquiry unit monitors the subscriber for a subscriber automatic mode request, and responsive thereto reverts to step 300 of Figure 3.

It is possible for a single text message to include text in different languages. For example, e-mail messages may include previous forwarded messages in different languages. Therefore the ability to revert to automatic mode from fixed mode is preferable. If a new sentence in a message is unintelligible to the subscriber due to change of language, they can immediately revert back to automatic mode for a best automatic estimation of the language identifier to be used.

Preferably, whenever the operational mode is switched between automatic mode and fixed mode or vice versa, the input text is re-positioned to the beginning of the current paragraph. The text to speech conversion process than begins again using the newly selected TTS engine for the newly selected language with the text re-positioned to the start of the current paragraph.

The subscriber is likely to opt to select to change the language after hearing the first part of a paragraph. Therefore the whole paragraph, even that already heard, will need to be converted to speech based on the new language identifier. In an alternative, the input text may be re-positioned to the start of the message, or at the start of the current sentence.

One skilled in the art will appreciate that further refinements may exist, such that the subscriber may be able to continue to skip back over previous sentences and repeat the text-to-speech conversion of any previous sentence.

Thus, under normal circumstances a subscriber can receive the benefit of automatic language identification. However when the automatic language identification operates incorrectly or inadequately, the caller can cycle through the list of languages available supported, preferably in the order most likely to result in success, skipping the automatically selected language.

In a further modification the system may provide for the subscriber to identify the language to be used for the text-to-speech conversion. In such an arrangement the subscriber may be provided with a code associated with each available language for entering into the system via DTMF key presses. In a still further modification, in a system equipped with Automatic Speech Recognition, the subscriber may speak the name of the language they want the system to try next.

One skilled in the art will appreciate that variations to the system may exist. For example in the above-described embodiment the automatic mode of operation is the default mode of operation. Alternative systems may require the subscriber to specifically select the mode of operation.

Although the invention has been described with specific reference to a particular automatic language identification technique, it will be appreciated that the invention may be used with other automatic language techniques.

One alternative automatic language recognition technique is disclosed in US patent application serial number 09/099,744 filed 13^{th} July 1997, published as US 2 001 056 348 A. In that technique prior to the text-to-speech conversion step the text is translated into a preferable language. In such an alternative arrangement the subscriber fixed mode request may alter the language identifier used to translate the text prior to speech conversion using a fixed speech-to-text generator.

From above it can be seen that the present invention is related to a unified message system and includes a voice gateway server coupled to an electronic mail system and a private branch exchange (PBX). The voice gateway server provides voice messaging services to a set of subscribers. Within the voice gateway server, a ti-graph analyzer sequentially examines 3 character combinations; compares the occurrence frequencies with reference occurrence statistics modeled from text samples written in particular languages; and generates a language identifier; and a likelihood value for the text message. Based upon the language identifiers a message inquiry unit selects an appropriate text-to-speech engine for converting the text message into computer-generated speech that is played to a subscriber.

While the present invention has been described with reference to certain preferred embodiments, those skilled in the art will recognize that various modifications can be provided. For example, a language identification tool based upon techniques other than graph methods could be utilized instead of the trigraph analyzeer 260 and associated corecurrence libraries 272, 273, 274, 275, 276. As another example one or more text-to-speech engines 242, 243, 244, 245, 246 could be implemented via hardware, such as through "off-board" text-to-speech engines accessed through the use of remote procedure calls. As yet another example, converted speech data or translated text data could be stored for future use, which could be useful in a store-once, multiple-playback environment. The description herein provides for these and other variations upon the present invention, as defined by the appended claims.

## Claims

1. A method of operating language-based conversion of a text message into speech, the method comprising the steps of:
retrieving the text message;
selecting a language identifier automatically by analysing contents of the text message in an automatic mode of operation;
converting the text message into computer-generated speech based on the selected language identifier; and
playing the computer-generated speech to a subscriber, **CHARACTERISED by** the further steps of:
in response to failure to convert the text message correctly using the selected identifier, newly selecting a language identifier in a fixed mode of operation from a set of predetermined language identifiers ordered according to a likelihood of each identifier being the correct language identifier, wherein the newly-selected language identifier is either the first identifier of the set of predetermined language identifiers from which set the identifier of the language used in the automatic mode has been removed or the identifier in the set of predetermined language identifiers which follows the language identifier used in the automatic mode; and
converting same said text message into computer-generated speech based on the newly-selected language identifier.

2. The method of claim 1 wherein the method switches from the automatic mode to the fixed mode responsive to a subscriber fixed-mode request.

3. The method of claim 2 wherein responsive to the subscriber fixed-mode request, the step of playing the computer-generated speech based on the selected language identifier is paused and the step of converting the text message based on the newly-selected language identifier reverts to the start of the current paragraph or the current sentence.

4. The method of claim 1 or claim 3 wherein in the fixed mode, the method switches to a next language identifier in the set responsive to another subscriber request.

5. The method of claim 4 in which the subscriber fixed-mode request includes an indication of the language identifier to be used.

6. The method of claim 1 where in the automatic mode of operation either is a default mode of operation or is initiated by a subscriber automatic-mode request.

7. The method of claim 1 in which at least one of the steps of converting comprises:
translating the text messages into a translated text message in a user-selected language based upon the language identifier, and
converting the translated text message into computer-generated speech based upon the user-selected language.

8. A messaging system for converting a text message into computer-generated speech, the system comprising:
means for storing a text message;
means, coupled to the means for storing text, for generating a language identifier corresponding to the text message automatically by analyzing content of the text message in an automatic mode of operation; and
a text-to-speech engine coupled to the means for storing, adapted to convert the text message into the computer-generated speech based upon the generated language identifier,
**CHARACTERISED IN THAT** the system further comprises:
means for selecting, upon failure of the text-to-speech engine to convert the text message correctly using the generated language identifier, a language identifier in a fixed mode of operation from a set of predetermined language identifiers, ordered according to a likelihood-of each identifier being the correct language identifier, wherein the selected language identifier is either the first identifier of the set of predetermined language identifiers from which the generated identifier has been removed or the identifier in the set of predetermined identifiers which follows the language identifier used in the automatic mode;
wherein the text-to-speech engine is adapted to convert same said text message using the selected language identifier.

9. The messaging system of claim 8 wherein:
the text-to-speech engine is adapted to respond to the selection by the selecting means by pausing the playing of the compute r-gene rated speech based on the generated language identifier and revert to the start of the current paragraph or the current sentence in converting the text message based on the selected language identifier.

10. The messaging system of claim 9 wherein:
the means for selecting is activated by a subscriber fixed-mode request, and the means for selecting selects a next language identifier in the set responsive to another subscriber request.

## Patentansprüche

1. Verfahren zum Betreiben einer sprachbasierten Umsetzung einer Textnachricht in Sprache, wobei das Verfahren folgende Schritte umfasst:
Auslesen der Textnachricht;
automatisches Auswählen eines Sprachidentifikators durch Analysieren des Inhalts der Textnachricht in einem automatischen Betriebsmodus;
Umsetzen der Textnachricht in computergenerierte Sprache auf Basis des ausgewählten Sprachidentifikators; und
Abspielen der computergenerierten Sprache für einen Teilnehmer;
**gekennzeichnet durch**
die folgenden weiteren Schritte:
in Reaktion auf ein Versagen, die Textnachricht unter Nutzung des ausgewählten Identifikators korrekt umzusetzen, erneutes Auswählen eines Sprachidentifikators in einem festgelegten Betriebsmodus aus einem Satz vorgegebener Sprachidentifikatoren, die gemäß einer Wahrscheinlichkeit des jeweiligen Identifikators, der richtige Sprachidentifikator zu sein, geordnet sind, wobei der neu gewählte Sprachidentifikator entweder der erste Identifikator aus dem Satz vorgegebener Sprachidentifikatoren ist, aus welchem Satz der Identifikator der im automatischen Modus genutzten Sprache entfernt worden ist, oder derjenige Identifikator in dem Satz vorgegebener Sprachidentifikatoren, welcher auf den im automatischen Modus genutzten Sprachidentifikator folgt; und
Umsetzen der gleichen Textnachricht in computergenerierte Sprache auf Basis des neu gewählten Sprachidentifikators.

2. Verfahren nach Anspruch 1,
wobei in Reaktion auf eine Anforderung eines festgelegten Modus durch einen Teilnehmer das Verfahren aus dem automatischen Modus in den festgelegten Modus umschaltet.

3. Verfahren nach Anspruch 2,
wobei in Reaktion auf die Anforderung eines festgelegten Modus durch den Teilnehmer der Schritt des Abspielens der computergenerierten Sprache auf Basis des ausgewählten Sprachidentifikators unterbrochen wird und der Schritt des Umsetzens der Textnachricht auf Basis des neu ausgewählten Sprachidentifikators zum Beginn des augenblicklichen Absatzes oder des augenblicklichen Satzes zurückkehrt.

4. Verfahren nach Anspruch 1 oder Anspruch 3,
wobei in dem festgelegten Modus das Verfahren in Reaktion auf eine andere Teilnehmeranforderung zu einem nächsten Sprachidentifikator in dem Satz umschaltet.

5. Verfahren nach Anspruch 4,
bei welchem die Anforderung des festgelegten Modus durch den Teilnehmer eine Angabe des zu nutzenden Sprachidentifikators enthält.

6. Verfahren nach Anspruch 1,
wobei der automatische Betriebsmodus entweder ein Vorgabebetriebsmodus ist oder durch eine Anforderung des automatischen Modus durch den Teilnehmer ausgelöst wird.

7. Verfahren nach Anspruch 1,
bei welchem mindestens einer der Umsetzungsschritte umfasst:
Übersetzen der Textnachrichten in eine übersetzte Textnachricht in einer durch den Benutzer gewählten Sprache auf Basis des Sprachidentifikators; und
Umsetzen der übersetzten Textnachricht in computergenerierte Sprache auf Basis der vom Benutzer ausgewählten Sprache.

8. Benachrichtigungssystem zum Umsetzen einer Textnachricht in computergenerierte Sprache, wobei das System umfasst:
Mittel zum Speichern einer Textnachricht;
Mittel, die mit den Mitteln zum Speichern von Text gekoppelt sind, um entsprechend der Textnachricht automatisch einen Sprachidentifikator zu generieren, und zwar durch Analysieren des Inhalts der Textnachricht in einem automatischen Betriebsmodus; und
eine Text/Sprache-Maschine, die mit den Mitteln zum Speichern gekoppelt ist, welche dazu angepasst ist, die Textnachricht auf Basis des generierten Sprachidentifikators in die computergenerierte Sprache umzusetzen,
**dadurch gekennzeichnet, dass** das System ferner umfasst:
Mittel, um bei Versagen der Text/Sprache-Maschine, die Textnachricht unter Verwendung des generierten Sprachidentifikators korrekt umzusetzen, einen Sprachidentifikator in einem festgelegten Betriebsmodus aus einem Satz vorgegebener Sprachidentifikatoren auszuwählen, die gemäß einer Wahrscheinlichkeit des jeweiligen Identifikators, der richtige Sprachidentifikator zu sein, geordnet sind, wobei der gewählte Sprachidentifikator entweder der erste Identifikator aus dem Satz vorgegebener Sprachidentifikatoren ist, aus welchem der generierte Identifikator entfernt worden ist, oder derjenige Identifikator in dem Satz vorgegebener Identifikatoren, welcher auf den im automatischen Modus genutzten Sprachidentifikator folgt;
wobei die Text/Sprache-Maschine dazu angepasst ist, die gleiche Textnachricht unter Nutzung des gewählten Sprachidentifikators umzusetzen.

9. Benachrichtigungssystem nach Anspruch 8,
wobei die Text/Sprache-Maschine dazu angepasst ist, auf die Auswahl mittels der Auswahlmittel zu reagieren, indem sie das Abspielen der computergenerierten Sprache auf Basis des generierten Sprachidentifikators unterbricht und zum Beginn des augenblicklichen Absatzes oder des augenblicklichen Satzes beim Umsetzen der Textnachricht auf Basis des gewählten Sprachidentifikators zurückkehrt.

10. Benachrichtigungssystem nach Anspruch 9,
wobei die Mittel zum Auswählen durch die Anforderung eines festgelegten Modus durch einen Teilnehmer aktiviert werden und die Mittel zum Auswählen in Reaktion auf eine andere Teilnehmeranforderung einen nächsten Sprachidentifikator in dem Satz auswählen.

## Revendications

1. Procédé pour utiliser la conversion à base de langage d'un message textuel en parole, le procédé comprenant les étapes consistant à :
récupérer le message textuel ;
sélectionner automatiquement un identifiant de langage en analysant le contenu du message textuel, sous un mode de fonctionnement automatique ;
convertir le message textuel en parole de synthèse, sur la base de l'identifiant de langage sélectionné ; et
reproduire la parole de synthèse à l'intention d'un abonné,
**caractérisé par** les étapes supplémentaires consistant à :
en réponse à une impossibilité de convertir le message textuel correctement, à l'aide de l'identifiant sélectionné, sélectionner de nouveau un identifiant de langage sous un mode fixe de fonctionnement, à partir d'un ensemble d'identifiants de langage, déterminés à l'avance, classés suivant une probabilité pour que chaque identifiant soit l'identifiant de langage correct, l'identifiant de langage nouvellement sélectionné étant soit le premier identifiant de l'ensemble d'identifiants de langage déterminés à l'avance, dont l'identifiant de langage utilisé sous le mode automatique a été extrait, soit l'identifiant de l'ensemble d'identifiants de langage déterminés à l'avance qui fait suite à l'identifiant de langage utilisé sous le mode automatique ; et
convertir le message textuel en parole de synthèse, sur la base de l'identifiant de langage nouvellement sélectionné.

2. Procédé suivant la revendication 1, dans lequel le procédé passe du mode automatique au mode fixe, en réponse à une requête de mode fixe de l'abonné.

3. Procédé suivant la revendication 2, dans lequel, en réponse à la requête de mode fixe de l'abonné, l'étape de reproduction de la parole de synthèse, sur la base de l'identifiant de langage sélectionné, est suspendue et l'étape de conversion du message textuel, sur la base de l'identifiant de langage nouvellement sélectionné retourne au début du paragraphe en cours ou de la phrase en cours.

4. Procédé suivant la revendication 1 ou 3, dans lequel sous le mode fixe, le procédé passe à un identifiant suivant de langage de l'ensemble, en réponse à une autre requête d'abonné.

5. Procédé suivant la revendication 4, dans lequel la requête de mode fixe de l'abonné comprend une indication de l'identifiant de langage à utiliser.

6. Procédé suivant la revendication 1, dans lequel le mode de fonctionnement automatique soit est un mode par défaut de fonctionnement soit est déclenché par une requête de mode automatique d'abonné.

7. Procédé suivant la revendication 1, dans lequel au moins l'une des étapes de conversion comprend le fait de :
traduire les messages textuels en un message textuel traduit dans un langage sélectionné par l'utilisateur, sur la base de l'identifiant de langage ; et
convertir le message textuel traduit en parole de synthèse, sur la base du langage sélectionné par l'utilisateur.

8. Système de messagerie pour convertir un message textuel en parole de synthèse, le système comprenant :
un moyen pour mémoriser un message textuel ;
un moyen, relié au moyen destiné à mémoriser du texte, pour créer automatiquement un identifiant de langage correspondant au message textuel, en analysant le contenu du message textuel, sous un mode de fonctionnement automatique ; et
un moteur de synthèse de la parole à partir du texte, relié au moyen de mémorisation, conçu pour convertir le message textuel en la parole de synthèse, sur la base de l'identifiant de langage créé,
**caractérisé en ce que** le système comprend, en outre :
un moyen pour sélectionner, en réponse à une impossibilité du moteur de synthèse de la parole à partir du texte de convertir le message textuel correctement, à l'aide de l'identifiant créé, un identifiant de langage sous un mode fixe de fonctionnement, à partir d'un ensemble d'identifiants de langage déterminés à l'avance, classés suivant une probabilité pour que chaque identifiant soit l'identifiant de langage correct, l'identifiant de langage sélectionné étant soit le premier identifiant de l'ensemble d'identifiants de langage déterminés à l'avance, dont l'identifiant créé a été extrait, soit l'identifiant de l'ensemble d'identifiants déterminés à l'avance qui fait suite à l'identifiant de langage utilisé sous le mode automatique ; et
le moteur de synthèse de la parole à partir du texte étant conçu pour convertir le même message textuel, à l'aide de l'identifiant de langage sélectionné.

9. Système de messagerie suivant la revendication 8, dans lequel :
le moteur de synthèse de la parole à partir du texte est conçu pour répondre à la sélection par le moyen de sélection en suspendant la reproduction de la parole de synthèse, sur la base de l'identifiant de langage créé et pour retourner au début du paragraphe en cours ou de la phrase en cours, lors de la conversion du message textuel, sur la base de l'identifiant de langage sélectionné.

10. Système de messagerie suivant la revendication 9, dans lequel :
le moyen de sélection est activé par une requête de mode fixe d'abonné, et le moyen de sélection sélectionne un identifiant suivant de langage de l'ensemble, en réponse à une autre requête d'abonné.
